# EUROPÄISCHE PATENTSCHRIFT

(11) **EP 1 440 643 B1**
(45) Veröffentlichungstag und Bekanntmachung des Hinweises auf die Patenterteilung: **26.12.2007**
(21) Anmeldenummer: 04001044.9
(22) Anmeldetag: 20.01.2004
(51) Int. Cl.: A47J 31/42

(54) **Kaffeebohnenbehälter für einen Kaffeeautomaten**
Container for coffee beans of an automatic coffee machine
Réservoir de grains de café pour distributeur automatique de café

(30) Priorität: 22.01.2003 DE 20300928 U
(43) Veröffentlichungstag der Anmeldung: 28.07.2004
(73) Patentinhaber: WIK Far East Ltd., North Point, Hong Kong (CN)
(72) Erfinder: Steckhan, Markus, 45481 Mülheim (DE)
(74) Vertreter: Haverkamp, Jens

(56) Entgegenhaltungen:
- EP-A- 1 068 826
- DE-U- 20 212 880
- GB-A- 280 452
- US-A1- 2002 145 010

## Beschreibung

Die Erfindung betrifft einen Kaffeebohnenbehälter für einen Kaffeeautomaten, umfassend ein Behältnis zur Aufbewahrung von Kaffeebohnen mit einem Ausgabeschacht, über den in dem Behältnis befindliche Kaffeebohnen einem Mahlwerk zugeführt werden können, und umfassend einen koaxial zum Ausgabeschacht angeordneten Kupplungsring zum Verbinden des Kaffeebohnenbehälters mit einem Kaffeeautomaten, wie aus dem Dokument US 2002/145010 bekannt.

Kaffeeautomaten bzw. Kaffeevollautomaten verfügen über einen Kaffeebohnenbehälter zum Bevorraten von Kaffeebohnen. Bei solchen Automaten wird bei jeder Anforderung frisch gemahlenes Kaffeepulver für die Kaffeezubereitung verwendet. Ein dem Automaten zugehöriges Mahlwerk ist für die Bereitstellung der jeweils benötigten Kaffeemehlmenge verantwortlich. Der Kaffeebohnenbehälter umfasst ein Behältnis mit einem Ausgabeschacht, der auf den Eingang des Mahlwerkes aufgesetzt ist. Der Ausgabeschacht des Behältnisses trägt in aller Regel oberseitig einen Leitkonus, damit die Kaffeebohnen dem Mahlwerk seitlich zugeführt werden. Das Behältnis ist unterseitig offen.

Befestigt ist der Kaffeebohnenbehälter mit dem Gehäuse des Kaffeeautomaten mittels eines Kupplungsringes, der an einem entsprechend konzipierten Gegenstück, beispielsweise nach Art eines Bajonettes festlegbar ist.

Eine Abnahme des Kaffeebohnenbehälters von dem Kaffeeautomaten ist nur mit leerem Kaffeebohnenbehälter möglich, da ansonsten die in dem Kaffeebohnenbehälter enthaltenen Kaffeebohnen durch den Ausgabeschacht herausfallen würden. Die Abnahme des Kaffeebohnenbehälters kann notwendig sein, um einen Zugang zum Mahlwerk zu erhalten, beispielsweise zu Reinigungszwecken, oder auch um den Kaffeebohnenbehälter selbst zu reinigen. Das Herausfallen der in dem Kaffeebohnenbehälter befindlichen Kaffeebohnen bei Abnahme des Kaffeebohnenbehälters wird jedoch als nachteilig empfunden.

Ausgehend von diesem diskutierten Stand der Technik liegt der Erfindung daher die Aufgabe zugrunde, einen Kaffeebohnenbehälter für einen Kaffeeautomaten bereitzustellen, der mit Kaffeebohnen befüllt von einem Kaffeeautomaten abgenommen werden kann, ohne dass aus dem Kaffeebohnenbehälter Kaffeebohnen herausfallen.

Diese Aufgabe wird erfindungsgemäß dadurch gelöst, dass dem Kaffeebohnenbehälter zum Verschließen des Ausgabeschachtes eine zumindest ein Verschlusselement umfassende Verschlusseinheit zugeordnet ist, wobei das zumindest eine Verschlusselement um eine parallel zur Achse des Ausgabeschachtes angeordnete Schwenkachse zwischen seinen Endstellungen schwenkbar gelagert ist, wobei die Verschlusseinheit über einen mechanischen Antrieb verfügt, durch den das zumindest eine Verschlusselement, mechanisch an eine Drehbewegung des Behältnisses gekoppelt, von seiner Offenstellung in seine Schließstellung oder umgekehrt verschwenkt werden kann.

Dieser Kaffeebohnenbehälter verfügt über eine Verschlusseinheit mit einem oder mehreren Verschlusselementen, die bei einer Abnahme des Kaffeebohnenbehälters von dem Kaffeeautomaten zwangsläufig in ihre Schließstellung gebracht werden. Ausgenutzt wird für diesen Zwangsverschluss des Kaffeebohnenbehälters die notwendige Drehbewegung, die zum Lösen des Kupplungsringes von seinem Gegenstück zum Abnehmen des Kaffeebohnenbehälters ausgeübt werden muss. Das zumindest eine Verschlusselement ist um eine parallel zur Achse des Ausgabeschachtes angeordnete Achse schwenkbar gelagert und kann in den Ausgabeschacht hinein in seine Schließstellung und auch diesem heraus in seine Offenstellung geschwenkt werden. Dieses zumindest eine Verschlusselement ist mechanisch angetrieben, wobei ein Kulissenantrieb zum Umsetzen der Drehbewegung des Behältnisses in eine Schwenkbewegung des oder der Verschlusselemente bevorzugt ist. Ein solcher Kulissenantrieb kann durch einen in eine Steuernut eingreifenden Steuerzapfen des zumindest einen Verschlusselements realisiert sein, wobei gemäß einer Ausgestaltung jedes Verschlusselement einen Steuerzapfen trägt, der in eine Steuernut eingreift. Je nach dem, ob das zumindest eine Verschlusselement am Kupplungsring oder an dem Behältnis gelagert ist, kann die Steuernut dem jeweilig anderen Element zugeordnet sein. Gleichfalls ist es möglich, eine Steuerscheibe mit einer der Anzahl der Verschlusselemente entsprechend Anzahl an Steuernuten vorzusehen. Grundsätzlich kann die gewünschte, an eine Drehbewegung des Behältnisses gekoppelte Schwenkbewegung des zumindest einen Verschlusselementes dadurch herbeigeführt werden, dass das zumindest eine Verschlusselement an dem Behältnis gelagert ist. In einem solchen Fall ist die Steuernut gegenüber einer Drehbewegung des Behältnisses und entsprechend der Verschlusselemente um die Achse des Ausgabeschachtes ortsfest angeordnet. Gleichfalls kann die Verschlusseinheit auch konzipiert sein, dass das zumindest eine Steuerkurve tragende Element an die Drehbewegung des Behältnisses gekoppelt ist.

In einer Weiterbildung ist vorgesehen, den Kupplungsring zwischen zumindest zwei Stellungen drehbar gegenüber dem Behältnis vorzusehen. Der eine Endanschlag zum Begrenzen der Drehbewegung des Behältnisses gegenüber dem Kupplungsring stellt die Offenstellung des zumindest einen Schließelementes dar. Die andere Endstellung entspricht der Geschlossenstellung des zumindest einen Verschlusselementes. Dadurch ist gewährleistet, dass eine Drehbewegung auf den Kupplungsring zum Lösen desselben von seinem am Kaffeeautomaten befindlichen Gegenstück erst möglich ist, wenn die Verschlusseinheit den Ausgabeschacht des Behältnisses verschließt, da eine Drehmomentübertragung von dem Behältnis auf den Kupplungsring zum Lösen desselben von seinem Gegenstück erst möglich ist, wenn das zumindest eine Verschlusselement in seiner den Ausgabeschacht sperrenden Schließposition sich befindet.

Die Verschlusseinheit kann beispielsweise zwei Verschlusselemente umfassen. Grundsätzlich besteht die Möglichkeit, eine Restöffnung zu belassen, deren lichte Weite jedoch kleiner ist als der kleinste Durchmesser einer durchschnittlichen Kaffeebohne.

Das zumindest eine Verschlusselement ist zweckmäßigerweise mit seiner zu dem Ausgabeschacht weisenden Seite zum Behältnis hin angeschrägt, um auf diese Weise vor dieser Stirnseite des Verschlusselementes befindliche Kaffeebohnen leichter verdrängen zu können.

Das Austauschen der in einem solchen Behälter enthaltenen Kaffeebohnen gegen eine andere Sorte ist ohne weiteres möglich, beispielsweise dadurch dass zum Betrieb eines Kaffeeautomaten mehrere, jeweils mit unterschiedlichen Bohnensorten befüllte Kaffeebohnenbehälter bereitgestellt sind oder etwa dadurch, dass die in dem Kaffeebohnenbehälter befindlichen Bohnen in ein Gefäß geschüttet und anschließend der entleerte Kaffeebohnenbehälter mit der gewünschten Bohnensorte befüllt wird.

Nachfolgend ist die Erfindung anhand eines Ausführungsbeispiels unter Bezugnahme auf die beigefügten Figuren beschrieben. Es zeigen:
- **Fig. 1:**: eine dreidimensionale Ansicht nach Art einer Explosionsdarstellung eines Kaffeebohnenbehälters für einen Kaffeeautomaten,
- **Fig. 2:**: einen Längsschnitt durch den Bereich des unteren Abschlusses des Kaffeebohnenbehälters der Figur 1,
- **Fig. 3:**: einen Schnitt entlang der Linie A - B der Figur 2 mit einer Verschlusseinheit und
- **Fig. 4:**: eine Darstellung entsprechend Figur 3 in ihrer den Ausgabeschacht mit der Verschlußeinheit des Kaffeebohnenbehälters verschließenden Stellung.

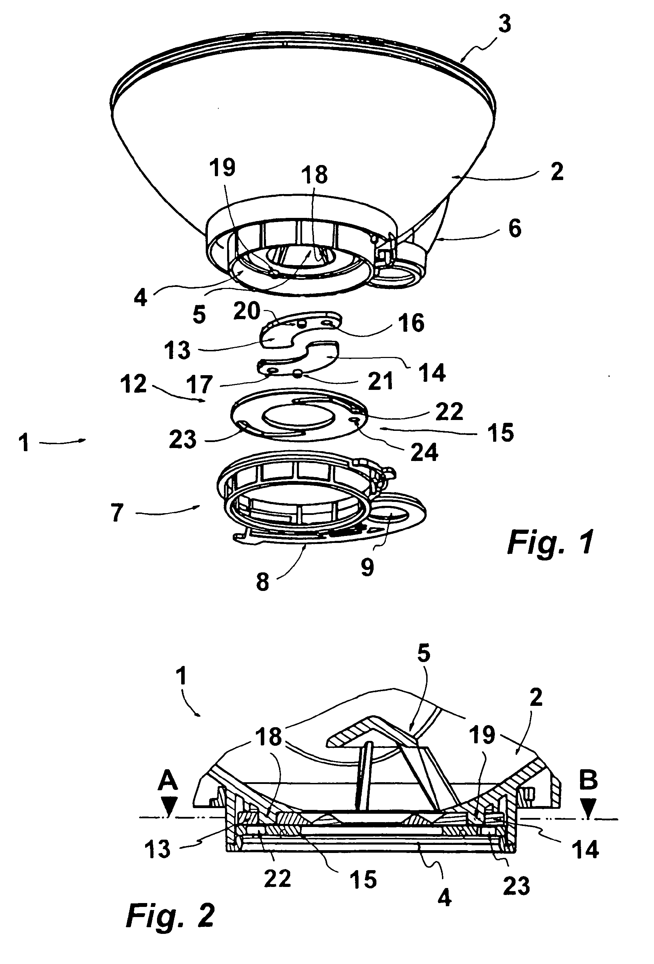

Ein Kaffeebohnenbehälter 1 umfasst ein Behältnis 2 zum Aufbewahren von Kaffeebohnen. Das Behältnis 2 umfasst einen Deckel 3 zum oberseitigen Verschließen des Behältnisses 2. Unterseitig verfügt das Behältnis 2 über einen Ausgabeschacht 4, über den in dem Behältnis 2 befindliche Kaffeebohnen einem Mahlwerk zugeführt werden können. Der Ausgabeschacht 4 ist oberseitig durch ein Leitelement 5 (vgl. auch Figur 2) begrenzt, das sich über Füße an der Innenwand des Behältnisses 2 abstützt. An das Behältnis 2 angeformt ist ein Kaffeemehlschacht 6, über den Kaffeemehl an dem Mahlwerk vorbei einen Kaffeeautomaten zugeführt werden kann. Mit dem Deckel 3 ist ebenfalls der Kaffeemehlschacht 6 oberseitig abgedeckt.

Teil des Kaffeebohnenbehälters 1 ist ein Kupplungsring 7, mit dem der Kaffebohnenbehälter 1 an einem in den Figuren nicht dargestellten Kaffeeautomaten anschließbar ist. Der Kupplungsring 7 ist bei dem dargestellten Ausführungsbeispiel drehfest mit dem Behältnis 2 verbunden. An dem Kupplungsring radial angeformt befindet sich ein Fortsatz 8 mit einer Öffnung 9. Die Öffnung 9 fluchtet mit dem unteren Ausgang des Kaffeemehlschachtes 6. Mit dem Fortsatz 8 kann eine Kaffeemehlzuführöffnung des Kaffeeautomaten verschlossen werden. Zum Zuführen von Kaffeemehl durch den Kaffeemehlschacht 6 wird der Kaffeebohnenbehälter 1 in eine Stellung gebracht, dass die Öffnung 9 mit der entsprechenden Öffnung des Kaffeeautomaten fluchtet.

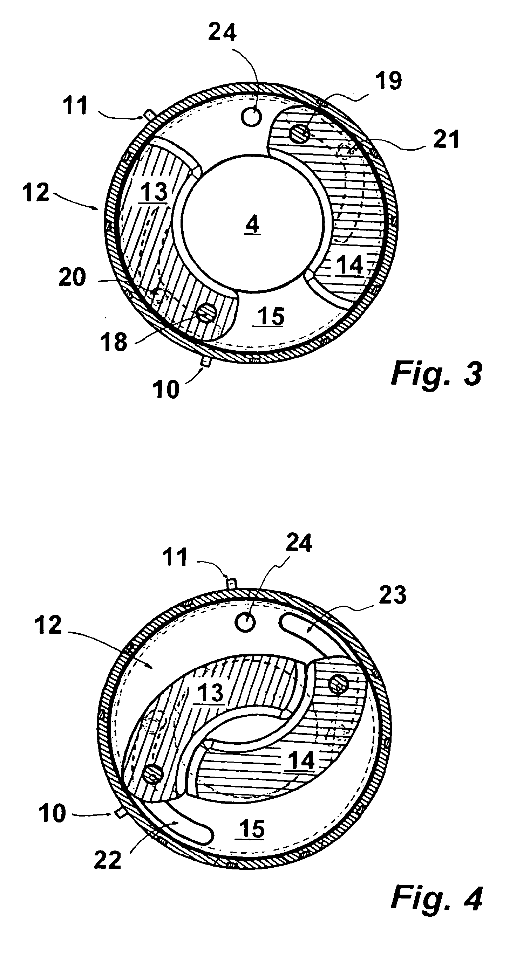

Der Kupplungsring 7 verfügt über Bajonettstifte 10, 11 (vgl. Figuren 3, 4) mit denen der Kupplungsring 7 und somit der Kaffeebohnenbehälter am Kaffeeautomat befestigbar ist.

Zwischen dem Kupplungsring 7 und dem Behältnis 2 ist im Bereich des Ausgabeschachtes 4 eine insgesamt mit den Bezugszeichen 12 gekennzeichnete Verschlusseinheit angeordnet. Die Verschlusseinheit 12 dient dem Zweck, dass der Ausgabeschacht 4 verschlossen werden kann, wenn der Kaffeebohnenbehälter 1 von einem Kaffeeautomaten abgenommen wird, um zu verhindern, dass in dem Behältnis 2 enthaltene Kaffeebohnen aus dem Ausgabeschacht 4 austreten. Die Verschlusseinheit 12 verfügt über zwei Verschlusselemente 13, 14 und über eine Steuerscheibe 15. Die Verschlusselemente 13, 14 sind bogenförmig ausgebildet und weisen im Bereich ihres einen Endes jeweils eine Lageröffnung 16, 17 auf. In die Lageröffnungen 16 bzw. 17 greift jeweils ein an der Unterseite des Behältnisses 2 angeformter Lagerzapfen 18 bzw. 19 (vgl. Figur 2) ein, wodurch die Verschlusselemente 13, 14 schwenkbar gelagert sind. Die durch die Lagerzapfen 18, 19 gebildeten Schwenkachsen verlaufen parallel zur Achse des Ausgabeschachtes 4. Die Verschlusselemente 13, 14 tragen an ihrer von dem Behältnis 2 wegweisenden Seite jeweils einen Steuerzapfen 20, 21. Jeder Steuerzapfen 20, 21 greift ein in einer Steuernut 22, 23 der Steuerscheibe 15. Die Steuerscheibe 15 ist drehfest gegenüber einer Drehbewegung des Behältnisses 2 gehalten und verfügt zu diesem Zweck über eine Arretierbohrung 24, in die bei auf einem Kaffeeautomaten aufgesetzten Kaffeebohnenbehälter 1 ein ortsfest an der Kaffeemaschine gehaltener Stift eingreift.

Die beiden Verschlusselemente 13, 14 sind an ihrer jeweils zur Achse des Ausgabeschachtes 4 weisenden Seite zum Behältnis 2 weisend angeschrägt, wie dieses aus der Schnittdarstellung der Figur 2 erkennbar ist.

Figur 3 zeigt in einer Schnittdarstellung mit Blickrichtung von dem Behältnis 2 nach unten die Verschlusseinheit 12 mit den beiden Verschlusselementen 13, 14. Unterhalb jedes Verschlusselementes 13 bzw. 14 befindet sich jeweils eine Steuernut 22 bzw. 23 der Steuerscheibe 15. Erkennbar ist auch die Anordnung des jeweiligen Steuerzapfens 20 bzw. 21, der jeweils in eine Steuernut 22 bzw. 23 eingreift.

Die Steuernuten 22, 23 weisen zwei Abschnitte auf. Ein erster außen liegender Abschnitt ist konzentrisch zur Achse des Ausgabeschachtes 4 angeordnet. Eine Drehbewegung des Behältnisses 2 bzw. des Kupplungsrings 7 innerhalb eines Drehwinkelbetrages in diesem Abschnitt hat keine Auswirkung auf eine Betätigung der Verschlusseinheit 12. Eine Drehbewegung innerhalb dieses Abschnittes führt zu einem Öffnen bzw. Verschließen der Kaffeeautomaten seitigen Öffnung zur Aufnahme von bereits gemahlenem Kaffeemehl. Die beiden Steuernuten 22, 23 weisen jeweils einen an den beschriebenen Abschnitt grenzenden tangential verlaufenden Abschnitt auf. Bei einer Drehbewegung des Behältnisses 2 im Uhrzeigersinn werden die beiden Steuerelemente 13, 14 infolge der beschriebenen Kulissenführung zum Einschwenken in den Ausgabeschacht 4 angetrieben, bis beide Verschlusselemente 13, 14 aneinander grenzen, wie dies in Figur 4 dargestellt ist. Eine verbleibende Restöffnung zwischen den beiden Verschlusselementen 13, 14 ist so dimensioniert, dass die lichte Weite dieser verbleibenden Restöffnung kleiner ist als der durchschnittliche Durchmesser der in dem Behältnis 2 aufzunehmenden Kaffeebohnen.

Der Bajonettverschluss des Kupplungsringes 7 gegenüber dem Kaffeeautomaten ist so ausgestaltet, dass der Kaffeebohnenbehälter 1 erst dann von dem Kaffeeautomaten abgenommen werden kann, wenn sich die Verschlusseinheit 12 in der in Figur 4 gezeigten Stellung befindet. Entsprechend ist die Kaffeeautomaten seitige Führung für die Bajonettstifte 10, 11 des Kupplungsringes 7 und die Anordnung des Kaffeeautomaten seitig gehaltenen Stiftes zum Eingreifen in die Arretierbohrung 24 ausgestaltet.

In einer Weiterbildung eines solchen Kaffeebohnenbehälters ist vorgesehen, einen Stellzapfen anzuordnen, der zum Entfernen von Kaffeebohnen zwischen die zwischen den Verschlusselementen verbleibende Restöffnung bewegt werden kann. Ein solcher Steuerzapfen kann federbeaufschlagt am Kaffeebohnenbehälter gelagert sein, so dass dieser in seiner Grundstellung zunächst nicht in die Restöffnung zwischen den geschlossenen Verschlusselementen eingreift. Lediglich bei Bedarf kann dieser Stellzapfen in die zwischen die Verschlusselemente greifende Stellung zum Wegdrücken ggf. verbliebener Kaffeebohnen hineinbewegt werden.

### Bezugszeichenliste

- 1: Kaffeebohnenbehälter
- 2: Behältnis
- 3: Deckel
- 4: Ausgabeschacht
- 5: Leitelement
- 6: Kaffeemehlschacht
- 7: Kupplungsring
- 8: Fortsatz
- 9: Öffnung
- 10: Bajonettstift
- 11: Bajonettstift
- 12: Verschlusseinheit
- 13: Verschlusselement
- 14: Verschlusselement
- 15: Steuerscheibe
- 16: Lageröffnung
- 17: Lageröffnung
- 18: Lagerzapfen
- 19: Lagerzapfen
- 20: Steuerzapfen
- 21: Steuerzapfen
- 22: Steuernut
- 23: Steuernut
- 24: Arretierbohrung

## Patentansprüche

1. Kaffeebohnenbehälter für einen Kaffeeautomaten, umfassend ein Behältnis (2) zur Aufbewahrung von Kaffeebohnen mit einem Ausgabeschacht (4), über den in dem Behältnis (2) befindliche Kaffeebohnen einem Mahlwerk zugeführt werden können, und umfassend einen koaxial zum Ausgabeschacht (4) angeordneten Kupplungsring (7) zum Verbinden des Kaffeebohnenbehälters (1) mit einem Kaffeeautomaten, **dadurch gekennzeichnet, dass** dem Kaffeebohnenbehälter (1) zum Verschließen des Ausgabeschachtes (4) eine zumindest ein Verschlusselement (13, 14) umfassende Verschlusseinheit (12) zugeordnet ist, wobei das zumindest eine Verschlusselement (13, 14) um eine parallel zur Achse des Ausgabeschachtes (4) angeordnete Schwenkachse zwischen seinen Endstellungen schwenkbar gelagert ist, wobei die Verschlusseinheit (12) über einen mechanischen Antrieb verfügt, durch den das zumindest eine Verschlusselement (13, 14), mechanisch an eine Drehbewegung des Behältnisses (2) gekoppelt, von seiner Offenstellung in seine Schließstellung oder umgekehrt verschwenkt werden kann.

2. Kaffeebohnenbehälter nach Anspruch 1, **dadurch gekennzeichnet, dass** der Antrieb ein Kulissenantrieb ist.

3. Kaffeebohnenbehälter nach Anspruch 2, **dadurch gekennzeichnet, dass** das zumindest eine Verschlusselement (13, 14) durch Eingriff eines Steuerzapfens (20, 21) in eine Steuernut (22, 23) angetrieben wird.

4. Kaffeebohnenbehälter nach Anspruch 3, **dadurch gekennzeichnet, dass** jedes Verschlusselement (13, 14) der Verschlusseinheit (12) einen Steuerzapfen (20, 21) trägt, der in eine Steuernut (22, 23) eingreift.

5. Kaffeebohnenbehälter nach Anspruch 4, **dadurch gekennzeichnet, dass** der Verschlusseinheit (12) eine Steuerscheibe (15) mit einer der Anzahl der Verschlusselemente (13, 14) entsprechende Anzahl an Steuernuten (22, 23) zugeordnet ist.

6. Kaffeebohnenbehälter nach Anspruch 5, **dadurch gekennzeichnet, dass** die Steuerscheibe drehfest mit dem Kupplungsring angeordnet ist.

7. Kaffeebohnenbehälter nach Anspruch 5, **dadurch gekennzeichnet, dass** das Behältnis (2) mit dem Kupplungsring (7) drehfest verbunden ist und die Steuerscheibe (15) eine Arretierrbohrung (24) aufweist, in die bei auf dem Kaffeeautomaten montiertem Kaffeebohnenbehälter (1) ein eine Ausübung einer Drehbewegung der Steuerscheibe (15) verhindernder Stift eingreift.

8. Kaffeebohnenbehälter nach einem der Ansprüche 1 bis 7, **dadurch gekennzeichnet, dass** die in seiner Offenstellung zum Ausgabeschacht weisende Seite des zumindest einen Verschlusselementes, (13, 14) zweckmäßigerweise zum Behältnis (2) hin angeschrägt ist.

9. Kaffeebohnenbehälter nach einem der Ansprüche 1 bis 8, **dadurch gekennzeichnet, dass** die Verschlusseinheit (12) zwei Verschlusselemente (13, 14) umfasst, die diametral zur Achse des Ausgabeschachtes (4) einander gegenüberliegend gelagert sind.

## Claims

1. Coffee bean container for an automatic coffee machine, the said coffee bean container comprising a receptacle (2) for the storage of coffee beans with an output chute (4), via which coffee beans situated in the receptacle (2) can be supplied to a grinder, and comprising a coupling ring (7) that is disposed coaxially to the output chute (4) for connecting the coffee bean container (1) to an automatic coffee machine, **characterised in that** a closure unit (12) that comprises at least one closure element (13, 14) is associated with the coffee bean container (1) for closing the output chute (4), wherein the at least one closure element (13, 14) is mounted so as to be pivotable about a pivotal axis, disposed parallel to the axis of the output chute (4), between its end positions, wherein the closure unit (12) has a mechanical driving means, by means of which the at least one closure element (13,14), coupled in a mechanical manner to a rotational movement of the receptacle (2), can be pivoted from its open position into its closed position or vice versa.

2. Coffee bean container according to claim 1, **characterised in that** the driving means is a crank drive.

3. Coffee bean container according to claim 2, **characterised in that** the at least one closure element (13, 14) is driven by the engagement of a control journal (20, 21) in a control groove (22, 23).

4. Coffee bean container according to claim 3, **characterised in that** each closure element (13, 14) of the closure unit (12) supports a control journal (20, 21), which engages in a control groove (22, 23).

5. Coffee bean container according to claim 4, **characterised in that** a control cam (15) with a number of control grooves (22, 23) corresponding to the number of closure elements (13, 14) is associated with the closure unit (12).

6. Coffee bean container according to claim 5, **characterised in that** the control cam is disposed in a non-rotational manner relative to the coupling ring.

7. Coffee bean container according to claim 5, **characterised in that** the receptacle (2) is connected in a non-rotational manner to the coupling ring (7) and the control cam (15) includes a locking bore (24), into which, with the coffee bean container (1) mounted on the automatic coffee machine, a pin that prevents an exercising of a rotational movement of the control cam (15) engages.

8. Coffee bean container according to one of claims 1 to 7, **characterised in that** the side of the at least one closure element (13, 14) pointing to the outlet chute in its open position is expediently inclined towards the receptacle (2).

9. Coffee bean container according to one of claims 1 to 8, **characterised in that** the closure unit (12) includes two closure elements (13, 14), which are mounted diametrically opposing each other relative to the axis of the output chute (4).

## Revendications

1. Réservoir de grains de café pour un distributeur automatique de café, comprenant un récipient (2) pour la conservation des grains de café avec un puits de distribution (4) par le biais duquel les grains de café se trouvant dans le récipient (2) peuvent être acheminés vers un broyeur et comprenant une bague de couplage (7), disposée de manière coaxiale par rapport au puits de distribution (4), destinée à relier le réservoir de grains de café (1) avec le distributeur automatique de café **caractérisé en ce qu'**il est affecté au réservoir de grains de café (1), dans le but de fermer le puits de distribution (4), une unité de verrouillage (12) comprenant au moins un élément de verrouillage (13, 14), lequel au moins un élément de verrouillage (13, 14) étant logé de façon à pivoter entre ses positions de fin de course autour d'un axe de pivotement disposé parallèlement à l'axe du puits de distribution (4), laquelle unité de verrouillage (12) possédant un mécanisme mécanique par lequel l'au moins un élément de verrouillage (13, 14), couplé mécaniquement à un mouvement de rotation du récipient (2), peut être pivoté de sa position ouverte vers sa position fermée ou vice-versa.

2. Réservoir de grains de café selon la revendication 1 **caractérisé en ce que** l'entraînement est une commande à coulisse.

3. Réservoir de grains de café selon la revendication 2 **caractérisé en ce que** l'au moins un élément de verrouillage (13, 14) soit entraîné par l'engagement d'un tourillon de commande (20, 21) dans une rainure de commande (22, 23).

4. Réservoir de grains de café selon la revendication 3 **caractérisé en ce que** chaque élément de verrouillage (13, 14) de l'unité de verrouillage (12) supporte un tourillon de commande (20, 21) qui s'engage dans une rainure de commande (22, 23).

5. Réservoir de grains de café selon la revendication 4 **caractérisé en ce qu'**il est affecté à l'unité de verrouillage (12) un plateau-came (15) avec un nombre de rainures (22, 23) qui correspond au nombre d'éléments de verrouillage (13, 14).

6. Réservoir de grains de café selon la revendication 5 **caractérisé en ce que** le plateau-came est disposé de façon fixe en rotation avec la bague de couplage.

7. Réservoir de grains de café selon la revendication 5 **caractérisé en ce que** le récipient (2) est relié de façon fixe en rotation à la bague de couplage (7) et que le plateau-came (15) présente un perçage d'arrêt (24) dans lequel s'engage une tige empêchant l'exercice d'un mouvement de rotation du plateau-came (15) lorsque le réservoir de grains de café (1) est monté sur le distributeur automatique de café.

8. Réservoir de grains de café selon l'une des revendications 1 à 7 **caractérisé en ce que** la face de l'au moins un élément de verrouillage (13, 14) orientée vers le puits de distribution dans sa position ouverte, est judicieusement biaisée en direction du récipient (2).

9. Réservoir de grains de café selon l'une des revendications 1 à 8 **caractérisé en ce que** l'unité de verrouillage (12) comprend deux éléments de verrouillage (13, 14) qui sont logés de façon diamétralement opposée, l'un par rapport à l'autre, sur l'axe du puits de distribution (4).
